Europäisches Patentamt

European Patent Office

Office européen des brevets

(11) Publication number: **0 398 150 B1**

(12) **EUROPEAN PATENT SPECIFICATION**

(45) Date of publication of patent specification: **10.08.94**  (51) Int. Cl.5: **G01C 9/16**, G01C 9/06

(21) Application number: **90108760.1**

(22) Date of filing: **10.05.90**

(54) **Attitude sensing apparatus.**

(30) Priority: **18.05.89 JP 122898/89**

(43) Date of publication of application:
**22.11.90 Bulletin  90/47**

(45) Publication of the grant of the patent:
**10.08.94 Bulletin  94/32**

(84) Designated Contracting States:
**DE FR GB**

(56) References cited:
**DE-C- 3 912 500
GB-A- 1 235 318
US-A- 4 486 844**

**PATENT ABSTRACTS OF JAPAN, vol. 12, no.
166 (P-704)[3013], 19th May 1988 & JP-A-62
280 608**

(73) Proprietor: **YAMAZAKI, Shigemi
7-16 Higashiyaguchi 2-chome
Ota-ku, Tokyo (JP)**

(72) Inventor: **YAMAZAKI, Shigemi
7-16 Higashiyaguchi 2-chome
Ota-ku, Tokyo (JP)**

(74) Representative: **Kahler, Kurt, Dipl.-Ing. Paten-
tanwälte Kahler, Käck & Fiener
Maximilianstrasse 57
Postfach 12 49
D-87712 Mindelheim (DE)**

## Description

### BACKGROUND OF THE INVENTION:

Field of the Invention:

The present invention relates to an omnidirectional azimuth and tilt angle meter which can detect a tilt angle and a tilt azimuth angle of a structure or a moving body.

Description of the Prior Art:

Though there is a demand for continuously detecting an omnidirectional tilt angle in an industrial robot, a ship, a special vehicle, civil engineering and construction works or the like, in this case often the detected value cannot be utilized for automatic control and the like unless a maximum tilt angle and azimuth angle thereof are detected on a real-time basis.

As a tilt angle measuring apparatus, an apparatus displaying a tilt angle about only one axis has been heretofore known. However, if it is intended to seek for a maximum tilt angle and an azimuth angle thereof over the entire direction, the apparatus is placed horizontally at a measuring point and rotated over 360 degrees about the measuring point by manual operations, then it is set in the direction indicating a maximum angle of elevation or depression, thereafter a tilt angle indicated at that time is read out, and both the set azimuth angle and the read tilt angle are jointly utilized as measured data.

While such works relying upon manual operations can be adapted for a wide range of azimuth angles, it necessitates much measuring time, and it is difficult to obtain precise omnidirectional tilt data at a given time point.

Moreover, it is impossible to use the data for automatic control which is especially demanded in recent years and which necessitates to process on a real-time basis, and so the use of such apparatus is extremely limited.

Therefore, one example of the prior art in which two tilt angle measuring apparatuses each measuring a tilt angle about only one axis are prepared and disposed at right angles to each other, and a maximum tilt angle and an azimuth angle are calculated from the measured data of the both measuring apparatuses (Laid-Open Japanese Patent Specification No. 62-280608(1987)), has been already proposed by the same inventor as the inventor of the present invention.

In this example of the prior art, two tilt angle sensors for detecting a tilt angle about one axis directed in a given direction are swingably disposed on a structure to be measured with their axes directed at right angles to each other, and the tilt angle sensors have their measuring movable planes always directed vertical.

Then, a maximum tilt angle and a tilt azimuth angle are calculated from the tilt angles detected by the respective tilt angle sensors.

However, due to the fact that the tilt angle sensor is disposed so as to be freely swingable with respect to a structure, in the case where it swings, it necessitates some time period until the sensor becomes stabilized, and so, for a structure whose attitude changes in a short period of time, a response speed of the sensor becomes an issue.

Also, in view of the amplitude of swinging of the tilt angle sensor, it is necessary to provide a large swinging space, and this becomes a bar against reduction in size.

Furthermore, in order to obtain a maximum tilt angle and its azimuth angle on the basis of detection signals issued from the two tilt angle sensors, complicated calculation is necessary , hence digital calculation by means of a computer becomes essentially necessary, and it resulted in a high cost.

### SUMMARY OF THE INVENTION:

The present invention has been worked out in view of the above-mentioned circumstances of the prior art, and it is one object of the present invention to provide a small-sized attitude sensing apparatus having an excellent response speed.

According to the present invention, this object is achieved by an attitude sensing apparatus according to claim 1.

Owing to the fact that the sensor support is controlled by the control means, a stabilizing speed of the tilt angle sensor supported by the sensor support is fast, and a response speed is extremely fast.

In addition, a swinging angle of the sensor support is small, and hence reduction in size of the entire apparatus can be achieved to the corresponding extent.

Furthermore, it is possible to calculate a precise maximum tilt angle $\theta$ and its azimuth angle $\Psi$ by making use of predetermined approximating calculation, hence a response speed is further improved by means of a simple calculator circuit, and a low cost can be realized.

The above-mentioned and other objects, features and advantages of the present invention will become more apparent by reference to the following description of preferred embodiments of the invention taken in conjunction with the accompanying drawings.

## BRIEF DESCRIPTION OF THE DRAWINGS:

In the accompanying drawings:

Fig.1 is a perspective view partly cut away of an attitude sensing apparatus according to one preferred embodiment of the present invention;

Figs.2 and 3 are schematic views of a control mechanism respectively showing different states thereof;

Fig.4 is a schematic block diagram of a control system;

Fig.5 is a diagram for explaining an operating principle;

Figs.6 to 8 are diagrams showing results of experiments; and

Fig.9 is a perspective view partly cut away of an attitude sensing apparatus according to another preferred embodiment of the present invention.

## DESCRIPTION OF THE PREFERRED EMBODIMENTS:

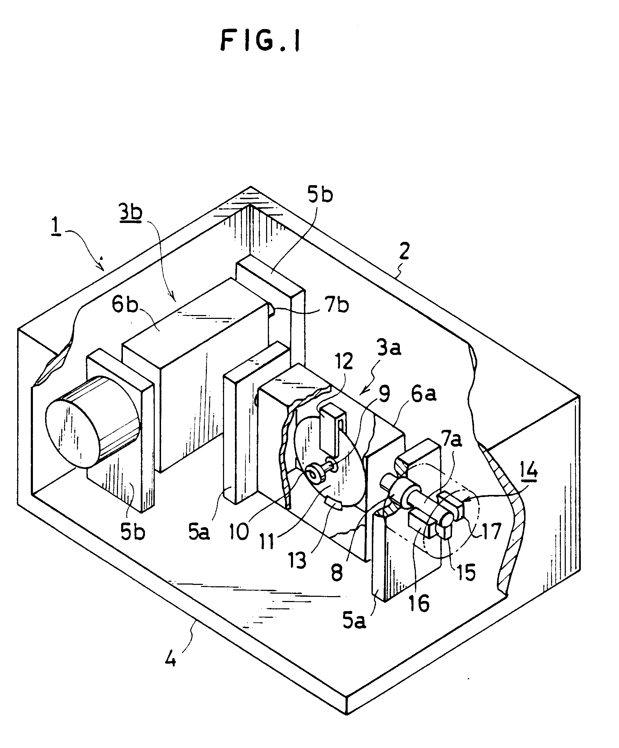

In the following, description will be made on one preferred embodiment of the present invention illustrated in Fig.1 to 8.

Fig.1 is a general perspective view partly cut away of an attitude sensing apparatus 1 according to the first preferred embodiment.

Within a casing 2 having a rectangular box shape are disposed two detecting devices 3a and 3b at right angles to each other.

Two pairs of opposed support plates 5a, 5a and 5b, 5b are erected on a bottom plate 4 of the casing 2, and the detecting devices 3a and 3b are respectively associated with the respective pairs of support plates 5a, 5a and 5b, 5b. Since these detecting devices 3a and 3b have an identical structure, in the following, description will be made on the structure of one detecting device 3a.

Between the opposed support plates 5a is positioned a sensor support 6a having a rectangular box shape, and coaxial rotary shafts 7a projected sidewisely outwards from front and rear side walls of the sensor support 6a are rotatably supported by bearings 8, 8 provided in the support plates 5a, 5a.

The rotary shafts 7a are parallel to the bottom plate 4 and directed in the direction at right angles to rotary shafts 7b of the other detecting device 3b.

Since the sensor support 6a is rotatably suspended with its center of gravity located lower than the axis of the rotary shafts 7a, the gravity acts upon the sensor support 6a in such manner that its left and right side surfaces may be always directed in the vertical direction.

Within the sensor support 6a is rotatably mounted a rotary shaft 9 directed in the direction at right angles of the aforementioned rotary shafts 7a, between the left and right side walls via bearings 10, and a disc 11 is integrally and fixedly secured to the rotary shaft 9.

This disc 11 is an optical slitted disc for use in an absolute type encoder, and a rotary angle of the disc 11 can be detected as a digital value by means of an optical reader 12 projected downwards from the top wall of the sensor support 6a along the radial direction of the disc 11.

At a predetermined position on the outer circumference of the disc 11 is fixedly secured a weight 13, and since this weight 13 tends to be positioned always right under the axis of the rotary shaft 9, normally the rotary angle of the disc 11 read out by the optical reader 12 is equal to a tilt angle formed between the axis of the rotary shafts 7a and the horizontal plane.

On the other hand, at the projected portion of the rotary shaft 7a having penetrated through the support plate 5a is provided rotation control means 14.

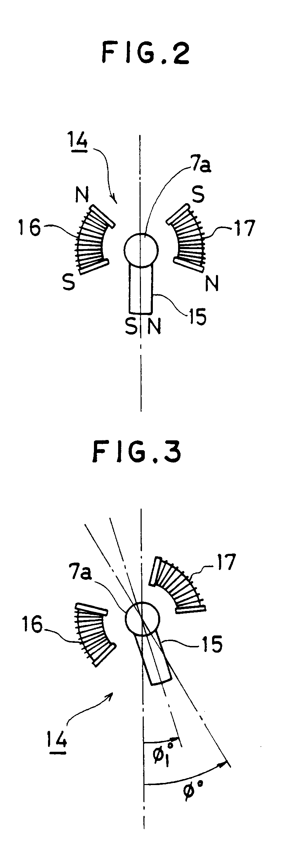

More particularly, as shown in Fig. 2, the rotation control means 14 is composed of a magnetic iron piece 15 projected radially outwards from the projected end portion of the rotary shaft 7a, and electromagnets 16 and 17 consisting of circular-arc-shaped iron cores having magnetizing coil wound therearound and disposed integrally with the support plate 5a.

The both magnetizing coils of the electromagnets 16 and 17 form a single continuous coil, they have equal turns of winding and hence equal magnetomotive forces, the magnetic poles of the electromagnets 16 and 17 of the side opposed to the magnetic iron piece 15 have the same polarities as the magnetic poles on the opposed sides of the magnetic iron piece 15, and accordingly, repulsive forces are acted upon each other.

When the attitude sensing apparatus 1 is in a horizontal state, as shown in Fig.2 the magnetic iron piece 15 is suspended vertically downwards from the rotary shaft 7a, and it is positioned at equal distances from the left and right electromagnets 16 and 17.

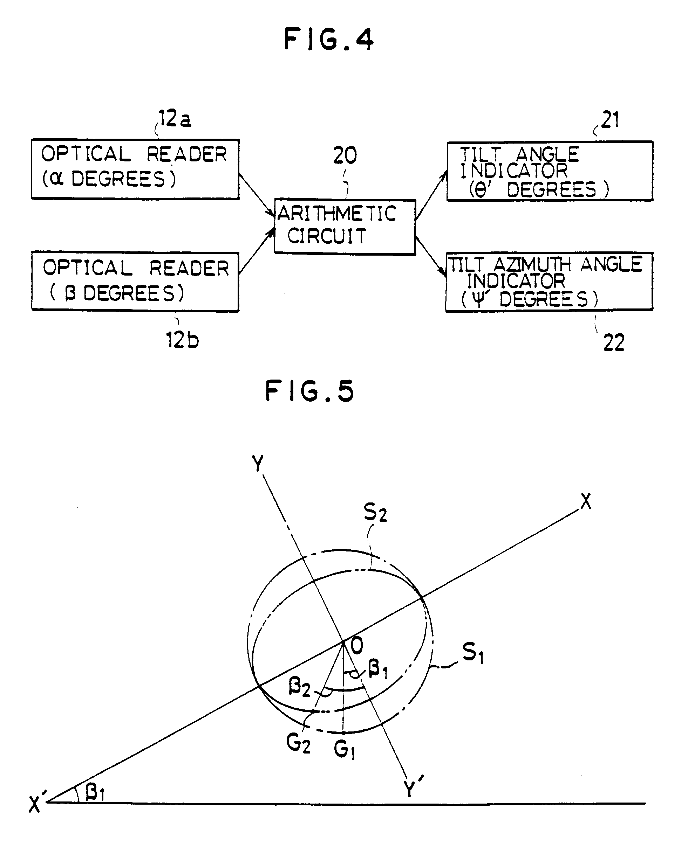

Assuming now that the attitude sensing apparatus 1 has tilted and the electromagnets 16 and 17 which are integral with the attitude sensing apparatus 1 have tilted to one side by an angle of $\Phi$ degrees as shown in Fig. 3, then the magnetic iron piece 15 will settle at the condition where a vertical downward force caused by the gravity and a repulsive force exerted principally by one electromagnet 16 on the approached side have balanced, and it will tilt by an angle of $\Phi_1$ degrees that is smaller than the angle of $\Phi$ degrees.

Accordingly the sensor support 6a also tilts by the angle of $\Phi_1$ degrees, and the disc 11 which forms a measuring plane likewise tilts by the angle of $\Phi_1$ degrees.

In the prior art, this sensor support tilted by the angle of Φ degrees integrally with the attitude sensing apparatus 1, or in the above-described example of the heretofore known apparatus it was always directed vertically downwards without any tilt.

In the case of the attitude sensing apparatus of the illustrated embodiment, the tilt angle of $\Phi_1$ degrees of the sensor support 6a can be appropriately adjusted by changing the current flowing through the electromagnets 16 and 17.

Accordingly, the optical reader 12 would read out a rotary angle of the disc 11 which has tilted by the angle of $\Phi_1$ degrees.

Even if the disc 11 should have a tilt, the disc 11 would rotate so that the weight 13 may be positioned always at the lowermost end of the disc 11, and the optical reader 12 detects a tilt angle $\alpha$ of the rotary shafts 7a along the tilted measuring plane under the condition tilted by the angle of the $\Phi_1$ degrees.

The other detecting device 3b having the same structure as the above-described detecting device 3a also can detect in a similar manner a tilt angle $\beta$ of the rotary shafts 7b directed at right angles to the rotary shafts 7a along the tilted measuring plane.

On the basis of the above-described tilt angles $\alpha$ and $\beta$ which are detected by the respective optical readers 12a and 12b of the both detecting devices 3a and 3b in the above-described manner, a maximum tilt angle $\theta$ and a tilt azimuth angle $\Psi$ under the placed condition of the attitude sensing apparatus 1 can be calculated according to the following approximating formulae:

$$\theta = \sqrt{(\alpha^2 + \beta^2)} \qquad (1)$$

$$\Psi = \sin^{-1}(\beta/\sqrt{(\alpha^2 + \beta^2)}) \qquad (2)$$

The calculation process is illustrated in a block form in Fig.4, where the detected tilt angles $\alpha$ and $\beta$ issued from the above-mentioned optical readers 12a and 12b are input to an arithmetic circuit 20 composed of simple digital operation elements, operations based on the above-described formulae (1) and (2) are executed in the arithmetic circuit 20, a calculated maximum tilt angle $\theta$ is output to a tilt angle indicator 21 and is displayed there, and a calculated tilt azimuth angle $\Psi$ is output to a tilt azimuth angle indicator 22 and is displayed there.

It is to be noted that although not shown in the drawings, output wirings from the optical readers 12a and 12b are led out through the inside of the rotary shafts 7a and 7b so as not to influence the rotation of the rotary shafts 7a and 7b, but it could be modified so as to be led out via slip rings.

In addition, the wirings extending from the optical readers 12a and 12b are led out from the casing 2 via a connector and connected to an operation/display unit provided separately from the attitude sensing apparatus 1, and in this operation/display unit are provided the arithmetic circuit 20, the tilt angle indicator 21, and the tilt azimuth angle indicator 22.

Now, description will be made on the reasons why the maximum tilt angle $\theta$ and the tilt azimuth angle $\Psi$ can be calculated at an extremely high precision according to the aforementioned approximating formulae (1) and (2) in the above-described structure not only in the case where the tilt angles $\alpha$ and $\beta$ are small but also even in the event that the structure has tilted largely.

Movement of a measuring plane corresponding to the disc 11 of one detecting device 3b is schematically illustrated in Fig. 5.

Here representing the angle formed between the axis of the rotary shafts 7b and the horizontal plane $\beta_1$ (degrees), the center of the measuring disc S by O, a straight line parallel to the rotary shafts 7b and passing through the same center O by X-X', and a straight line perpendicular to the straight line X-X' and passing through the center O by Y-Y'.

If the sensor support 6b is free without being subjected to any control force, then the measuring disc S is always directed in the vertical direction, hence in Fig. 5 it becomes a true circle $S_1$ as shown by a single-dot chain line, the position of the weight is at the lowermost end $G_1$, and the reading by the optical reader 12b is $\angle G_1OY'$, that is, the tilt angle $\beta_1$ of the straight line X-X'.

Whereas, assuming that the sensor support 6b is fixed to the casing 2 and it tilts integrally with the latter, then when the other detecting device 3a presents a tilt angle value other than O degree, the measuring disc S will tilt, and in Fig.5 it becomes an ellipse $S_2$ as shown by a double-dot chain line.

Accordingly, the position of the weight is at the lowermost end $G_2$ of the ellipse, and the reading by the optical reader 12b indicates $\angle G_2OY'( = \beta_2 )$.

However, in the illustrated embodiment, since the tilt of the sensor support 6b is subjected to control by the electromagnets 16 and 17, under the above-mentioned condition the measuring disc S would tilt to a certain extent, but would not so much as the tilt angle when the sensor support 6b is fixed to the casing 2.

Accordingly, in Fig.5 the measuring disc S is represented by an ellipse in the middle between the true circle $S_1$ ( single-dot chain line ) and the ellipse $S_2$ (double-dot chain line ), and the reading by the optical reader 12b would present an intermediate value between $\beta_1$ and $\beta_2$.

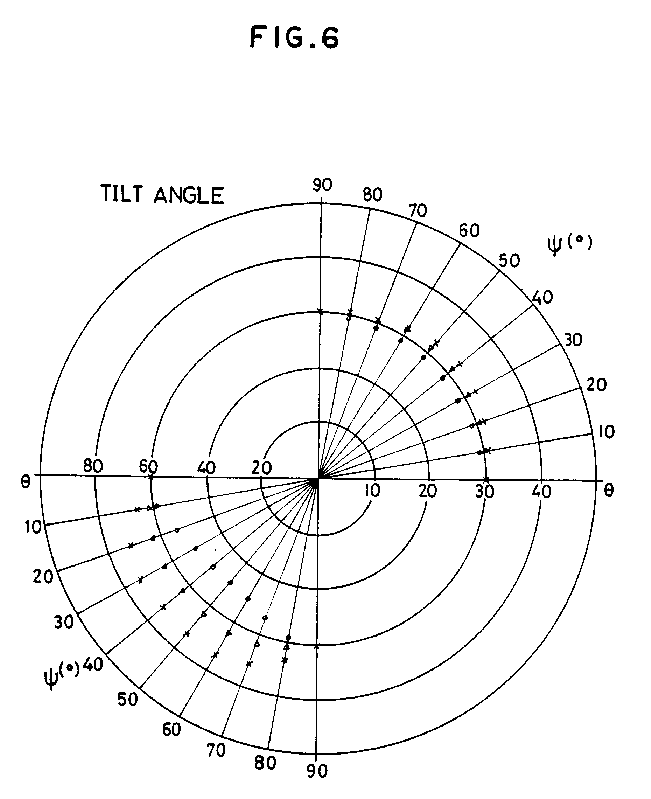

Now the experimental results are diagrammatically shown in Figs.6 to 8.

In these experiments, when the azimuth angle Ψ was varied from 0 degree up to 90 degrees while fixing the maximum tilt angle at 30 degrees or at 60 degrees, the indicated values of the tilt angle indicator 21 and the tilt azimuth angle indicator 22 which were obtained through the calculations according to the above-described approximating formulae, were read out, and Figs. 6 to 8 represent these data graphically.

Marks ○ represent indicated values in the case where the sensor supports 6a and 6b are allowed to swing completely freely with respect to the casing 2, marks X represent indicated values in the case where the sensor supports 6a and 6b are fixed, and marks △ represent the indicated values in the case where the control according to the above-described embodiment of the present invention is executed.

Fig. 6 is representation in a circular graph, in which for a given azimuth angle Ψ', an indicated tilt angle θ' is represented as a radial distance.

Especially reviewing the data for θ = 60° in which errors are revealed remarkably, in the case where the sensor support is made free (marks ○), the indicated tilt angles θ' present smaller values than 60 degrees, and especially in the proximity of Ψ = 45° the error is large.

On the other hand, in the case where the sensor support is fixed (marks X), the displayed tilt angles θ' largely exceed 60 degrees.

Whereas, in the case where control is executed for the sensor support in the attitude sensing apparatus according to the illustrated embodiment (marks △), the indicated tilt angle θ' is slightly larger than θ' = 60°, and even in comparison with the case where the sensor support is made free (marks ○) the errors are extremely small.

The above-mentioned tendency is also the same in the case of θ = 30°, and the errors are further reduced.

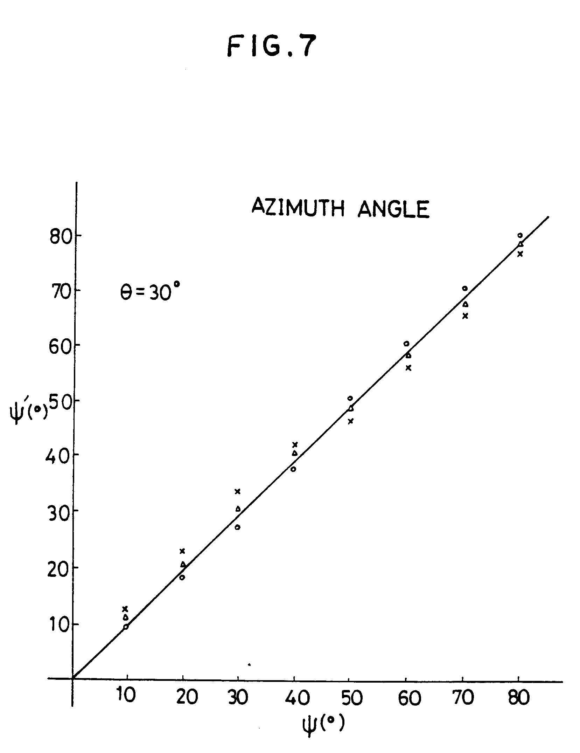

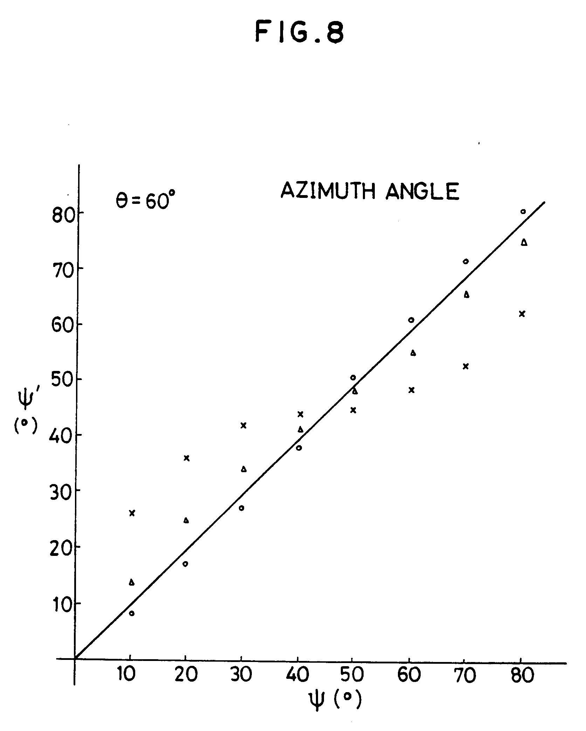

Next, reviewing the data of the indicated azimuth angle Ψ' shown in Figs. 7 and 8, in either case, the data distribute above or below the straight line representing Ψ' = Ψ depending upon on which side of the boundary Ψ = 45° the data exist.

The data in the case of the fixed sensor support (marks X) and the data in the case of the freed sensor support (marks ○) distribute on the opposite sides of the straight line representing Ψ' = Ψ to each other for each value of Ψ, and in the case of the controlled sensor support (marks △) the data distribute in the middle of the data in the first-mentioned tow cases, and their errors nearly of the same order as the case of the freed sensor support (marks ○).

From the above-described experimental data it is seen that in the case of the attitude sensing apparatus according to the above-described embodiment, with regard to an azimuth angle the errors are almost not different from those in the case of the freed sensor support, with regard to a tilt angle the errors are smaller than those in the case of the freed sensor support, and as a whole, the precision is improved.

The above-mentioned result can be confirmed also through theoretical calculations.

It is to be noted that in practice the apparatus is preset so as to minimize the errors by adjusting the value of the current flowing through the electromagnets 16 and 17.

As described above, in the illustrated embodiment, owing to calculations based on approximating formulae, it is possible to calculate and indicate a precise maximum tilt angle and a precise tilt azimuth angle by means of a simple circuit construction.

Also, in addition to the fact that the calculation is simple, since swinging of the sensor support is controlled by electromagnets, the sensing apparatus is strong against vibration, its response is fast, and processing on a real-time basis is made possible.

Accordingly, a swinging angle of the sensor support is small, also an electric circuit is simple, and hence reduction in size and cost can be realized.

Furthermore, in order to quickly stabilize the rotation of the rotary shaft 7a, a magnetic damper mechanism could be provided additionally.

It is to be noted that while digital calculation was effected in the arithmetic circuit in the illustrated embodiment, as the formulae are simple approximating formulae, analog calculation is also possible, thereby the apparatus can be improved into an apparatus having more excellent quick response characteristics, also the tilt angle sensor is not limited to a digital value output type, but a tilt angle sensor of analog value output type is also available, and the data can be directly calculated in analog values themselves.

As a practical system for calculating the tilt angle, an absolute encoder composed of a pendulum type sensor, a magnetic resistance element, a tilt meter of potentiometer type, servo type, bubble type, capacity type, mercury type, etc. can be utilized.

While the electromagnets 16 and 17 were used as braking means in the above-described embodiment, it is also possible to use permanent magnets having a predetermined magnetic force, or spring coils, spiral springs, sheet springs, spring wires or the like having a predetermined torque.

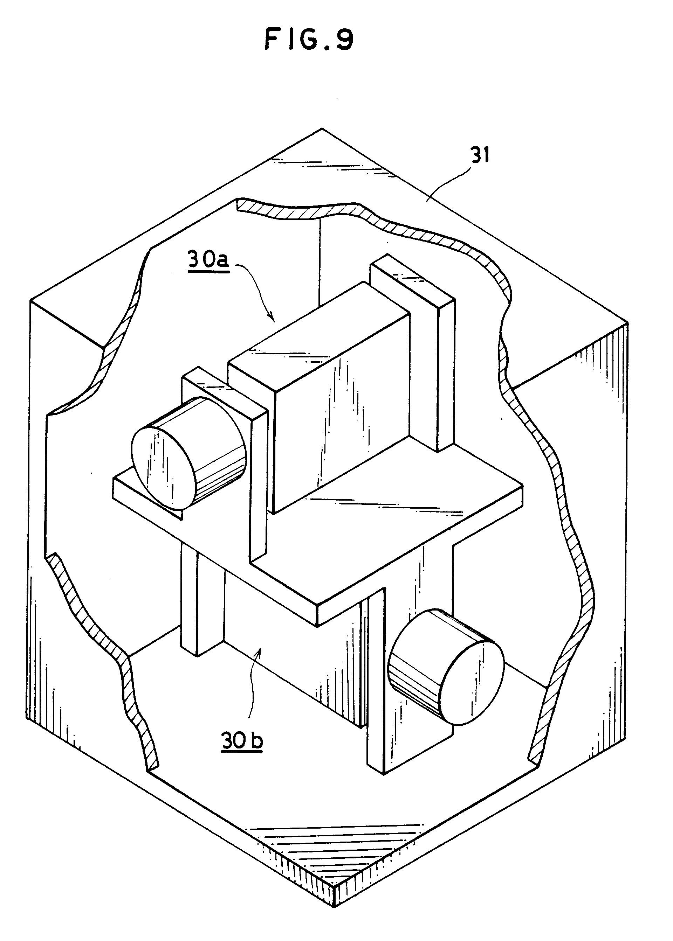

Furthermore, while two detecting devices 3a and 3b were arranged two-dimensionally on the bottom plate within the casing 2 in the above-described embodiment, two detecting devices 30a and 30b could be arranged in a vertically superposed relationship as shown in Fig.9, and by employing such arrangement, a space within a casing 31 can be utilized effectively and reduction in size of the apparatus can be realized.

As will be apparent from the detailed description of the preferred embodiments above, according to the present invention, since swinging of a sensor is controlled by control means, the apparatus can be stabilized in early time, a response spend is extremely fast, and so, indication having excellent quick response characteristics and utilization of the data for control another apparatus on a real-time basis are possible.

Owing to the small swinging angle of the sensor support resulted from the control so as to suppress the swinging angle, reduction in size of the apparatus can be realized.

moreover, since a precise maximum tilt angle and its azimuth angle are calculated by making use of predetermined approximating calculation, response characteristics can be further improved with a simple circuit construction, also the improvement can contribute to realization of a small size and a light weight, and reduction in cost can be achieved.

## Claims

1. An attitude sensing apparatus (1;31) comprising two detecting devices (3a,3b;30a,30b) disposed at right angles to each other on a structure (4, 5a, 5b) whose attitude is to be measured, each detecting device including a rotary shaft (7a,7b) rotatably supported from said structure (4, 5a, 5b), a sensor support (6a,6b) fixed to said rotary shaft (7a,7b) and swingably disposed on said structure (4, 5a, 5b), a tilt angle sensor (9 to 13) supported by said sensor support (6a,6b) for detecting a tilt angle of said sensor support (6a,6b) within a plane containing the axis of said rotary shaft (7a,7b), and control means (14) for controlling a swinging of said sensor support (6a, 6b) with respect to said structure (4, 5a, 5b), said control means (14) including means (15, 16, 17) for rotating said rotary shaft (7a, 7b) in the same rotational direction as said structure (4, 5a, 5b) by a predetermined rotational angle ($\Phi_1$) smaller than a rotational angle ($\Phi$) of said structure (4, 5a, 5b) when said structure (4, 5a, 5b) rotates about said rotary shaft (7a, 7b) by said rotational angle ($\Phi$) and the sensor support (6a, 6b) is biased in the vertical direction by gravity; and calculator means (20) for calculating the attitude of said structure (4, 5a, 5b) on the basis of detected values ($\alpha$, $\beta$) fed from said tilt angle sensors (9 to 13) of the both detecting devices (3a,3b;30a,30b).

2. An attitude sensing apparatus (1;31) as claimed in claim 1, wherein said tilt angle sensor (9 to 13) comprises a second rotary shaft (9) supported from said sensor support (6a,6b) so as to be rotatable about an axis directed in a perpendicular direction to first said rotary shaft (7a,7b), a disc (11) fixedly secured to said second rotary shaft (9), and a member (12) fixedly secured to said sensor support (6a,6b) so as to oppose to said disc (11) for sensing a rotary angle ($\alpha,\beta$) of said disc (11).

3. An attitude sensing apparatus (1;31) as claimed in claim 2, wherein a weight (13) is fixedly secured to a predetermined position on the outer circumference of said disc (11).

4. An attitude sensing apparatus (1;31) as claimed in claim 2, wherein said member (12) for sensing a rotary angle ($\alpha,\beta$) of said disc (11) is an optical reader.

5. An attitude sensing apparatus (1;31) as claimed in any preceding claim, wherein said control means (14) comprises a magnetic iron piece (15) projecting radially outwards from an end portion of said rotary shaft (7a), and a pair of magnets (16,17) opposed to each other on the opposite sides of said magnetic iron piece (15) and spaced at an interval and fixed with respect to said structure (4,5a,5b)

6. An attitude sensing apparatus (1;31) as claimed in any preceding claim, wherein said calculator means (20) calculate a maximum tilt angle $\theta$ and a tilt azimuth angle $\Psi$ on the basis of tilt angles $\alpha$ and $\beta$ detected by the tilt angle sensors (9 to 13) in said two detecting devices (3a,3b;30a,30b) according to the following approximating formulae:

$$\theta = \sqrt{(\alpha^2 + \beta^2)}$$
$$\Psi = \sin^{-1}(\beta/\sqrt{(\alpha^2 + \beta^2)})$$

7. An attitude sensing apparatus (1) as claimed in any preceding claim, wherein said two detecting devices (3a,3b) are disposed within a same plane.

8. An attitude sensing apparatus a- claimed in any of claims 1 to 6, wherein said two detecting devices (30a,30b) are disposed in a vertically superposed relationship.

**Patentansprüche**

1. Ein Stellungsfühler (1;31) mit zwei Erfassungseinrichtungen (3a,3b;30a,30b), die rechtwinklig zueinander an einer Struktur (4,5a,5b) angeordnet sind, deren Stellung gemessen werden soll, wobei jede Erfassungseinrichtung eine Rotationsachse (7a,7b) umfaßt, die drehbar auf der Struktur (4,5a,5b) befestigt ist; einem Meßfühlerträger (6a,6b), der an der Rotationsachse (7a,7b) befestigt und schwenkbar auf der Struktur (4,5a,5b) angeordnet ist; einem Kippwinkelfühler (9 bis 13), der zur Erfassung eines Kippwinkels des Meßfühlerträgers (6a,6b) innerhalb einer die Achse der Rotationsachse (7a,7b) enthaltenden Ebene auf dem Meßfühlerträger (6a,6b) abgestützt ist; und einer Steuervorrichtung (14) zum Steuern einer Verschwenkung des Meßfühlerträgers (6a,6b) bezüglich der Struktur (4,5a,5b), wobei die Steuervorrichtung (14) Einrichtungen (15,16,17) aufweist, um die Rotationsachse (7a,7b) in derselben Rotationsrichtung wie die Struktur (4,5a,5b) mit einem vorbestimmten Rotationswinkel ($\Phi_1$) zu drehen, der kleiner ist als ein Rotationswinkel ($\Phi$) der Struktur (4,5a,5b), wenn sich die Struktur (4,5a,5b) mit dem Rotationswinkel ($\Phi$) um die Rotationsachse (7a,7b) dreht und der Meßfühlerträger (6a,6b) durch die Schwerkraft in vertikaler Richtung beaufschlagt ist; und Rechnervorrichtungen (20) zum Berechnen der Stellung der Struktur (4,5a,5b) aufgrund der erfaßten Werte ($\alpha,\beta$), die von den Kippwinkelfühlern (9 bis 13) der beiden Erfassungseinrichtungen (3a,3b;30a,30b) abgegeben werden.

2. Stellungsfühler (1;31) nach Anspruch 1, wobei der Kippwinkelfühler (9 bis 13) eine zweite Rotationsachse (9) aufweist, die so von dem Meßfühlerträger (6a,6b) abgestützt ist, daß sie um eine Achse drehbar ist, die sich lotrecht zu der ersten Rotationsachse (7a,7b) erstreckt, wobei eine Scheibe (11) ortsfest an der zweiten Rotationsachse (9) befestigt ist und ein Element (12) ortsfest so an dem Meßfühlerträger (6a,6b) befestigt ist, daß es der Scheibe (11) zum Abtasten eines Rotationswinkels ($\alpha,\beta$) der Scheibe (11) gegenüberliegt.

3. Stellungsfühler (1;31) nach Anspruch 2, wobei ein Gewicht (13) ortsfest an einer vorbestimmten Stelle auf dem äußeren Umfang der Scheibe (11) befestigt ist.

4. Stellungsfühler (1;31) nach Anspruch 2, wobei das Element (12) zum Abtasten eines Rotationswinkels ($\alpha,\beta$) der Scheibe (11) ein optisches Lesegerät ist.

5. Stellungsfühler (1;31) nach einem der vorhergehenden Ansprüche, wobei die Steuervorrichtung (14) ein magnetisches Eisenstück (15) aufweist, das sich radial von einem Endbereich der Rotationsachse (7a) nach außen erstreckt und ein Paar Magneten (16,17), die einander auf den entgegengesetzten Seiten des magnetischen Eisenstücks (15) gegenüberliegen und bezüglich der Struktur (4,5a,5b) mit einem Abstand verteilt und befestigt sind.

6. Stellungsfühler (1;31) nach einem der vorhergehenden Ansprüche, wobei die Rechnervorrichtungen (20) einen maximalen Kippwinkel $\Theta$ und einen Kippazimutwinkel $\Psi$ auf der Basis von Kippwinkeln $\alpha$ und $\beta$ berechnen, die von den Kippwinkelfühlern (9 bis 13) in den beiden Erfassungseinrichtungen (3a,3b;30a,30b) gemäß folgender Annäherungsformel erfaßt werden:

$$\Theta = \sqrt{(\alpha^2 + \beta^2)}$$
$$\Psi = \sin^{-1}(\beta/\sqrt{(\alpha^2 + \beta^2)})$$

7. Stellungsfühler (1) nach einem der vorhergehenden Ansprüche, wobei die beiden Erfassungseinrichtungen (3a,3b) innerhalb einer gleichen Ebene angeordnet sind.

8. Stellungsfühler nach einem der Ansprüche 1 bis 6, wobei die beiden Erfassungseinrichtungen (30a,30b) in vertikal übereinanderliegender Beziehung angeordnet sind.

**Revendications**

1. Un appareil de détection d'attitude (1; 31) comprenant deux dispositifs de détection (3a, 3b; 30a, 30b) disposés perpendiculairement, l'un par rapport à l'autre, sur une structure (4, 5a, 5b) dont on doit mesurer l'attitude, chaque dispositif de détection comprenant un arbre tournant (7a, 7b) monté à rotation sur ladite structure (4, 5a, 5b), un support de capteur (6a, 6b) fixé sur ledit arbre tournant (7a, 7b) et monté oscillant sur ladite structure (4, 5a, 5b), un capteur d'angle d'inclinaison (9 à 13) supporté par ledit support de capteur (6a, 6b) pour détecter l'angle d'inclinaison dudit support de capteur (6a, 6b) dans un plan contenant l'axe dudit arbre tournant (7a, 7b), et des moyens de commande (14) pour commander l'oscillation dudit support de capteur (6a, 6b) par rapport à ladite structure (4, 5a, 5b), lesdits moyens de commande (14) comprenant des moyens (15, 16, 17) pour entraîner à rotation ledit arbre tournant (7a, 7b) dans la même direction de rotation que ladite structure (4, 5a, 5b) d'un angle de rotation prédéterminé ($\Phi_1$) inférieur à un angle de rotation ($\Phi$) de ladite structure (4, 5a, 5b) quand ladite structure (4, 5a, 5b) tourne autour dudit arbre tournant (7a, 7b) dudit angle de rotation ($\Phi$) et le support de capteur (6a, 6b) est sollicité en direction verticale par la pesanteur; et des moyens de calcul (20) pour calculer l'attitude de ladite structure (4, 5a, 5b) sur la base des valeurs détectées ($\alpha$, $\beta$) émises par lesdits capteurs d'angle d'inclinaison (9 à 13) des deux dispositifs de détection (3a, 3b; 30a, 30b).

2. Un dispositif de détection d'attitude (1; 31) selon la revendication 1, dans lequel ledit capteur d'angle d'inclinaison (9 à 13) comprend un second arbre tournant (9) supporté par ledit support de capteur (6a, 6b) de manière à pouvoir tourner autour d'un axe dirigé dans une direction perpendiculaire au premier desdits arbres tournants (7a, 7b), un disque (11) monté fixe sur ledit second arbre tournant (9), et un élément (12) monté fixe sur ledit support de capteur (6a, 6b) de manière à s'opposer audit disque (11) pour détecter un angle de rotation ($\alpha$, $\beta$) dudit disque (11).

3. Un dispositif de détection d'attitude (1; 31) selon la revendication 2, dans lequel une masselotte (13) est montée de façon fixe dans une position prédéterminée sur la circonférence extérieure dudit disque (11).

4. Un dispositif de détection d'attitude (1; 31) selon la revendication 2, dans lequel ledit élément (12) de détection d'angle de rotation ($\alpha$, $\beta$) dudit disque (11) est un lecteur optique.

5. Un dispositif de détection d'attitude (1; 31) selon l'une quelconque des précédentes revendications, dans lequel lesdits moyens de commande (14) comprennent un élément en fer magnétique (15) en saillie radialement vers l'extérieur à partir d'une partie d'extrémité dudit arbre tournant (7a), et une paire d'aimants (16, 17) opposés, l'un par rapport à l'autre, sur les côtés opposés dudit élément en fer magnétique (15) et espacés d'un intervalle et fixes par rapport à ladite structure (4, 5a, 5b).

6. Un dispositif de détection d'attitude (1; 31) selon l'une quelconque des précédentes revendications, dans lequel lesdits moyens de calcul (20) calculent un angle d'inclinaison maximum $\theta$ et un angle d'azimut d'inclinaison T à partir des angles d'inclinaison $\alpha$ et $\beta$ détectés par les capteurs d'angle d'inclinaison (9 à 13) desdits deux dispositifs de détection (3a, 3b, 30a, 30b), suivant les formules d'approximation suivantes:

$$\theta = \sqrt{(\alpha^2 + \beta^2)}$$
$$\Psi = \sin^{-1}(\beta/\sqrt{(\alpha^2 + \beta^2)})$$

7. Un dispositif de détection d'attitude (1) selon l'une quelconque des précédentes revendications, dans lequel lesdits deux dispositifs de détection (3a, 3b) sont disposés dans un même plan.

8. Un dispositif de détection d'attitude selon l'une quelconque des précédentes revendications, dans lequel lesdits deux dispositifs de détection (30, 30) sont disposés en relation superposée verticalement.

# FIG.1

# FIG.2

# FIG.3

# FIG.4

OPTICAL READER
(α DEGREES) 12a

OPTICAL READER
( β DEGREES) 12b

ARITHMETIC
CIRCUIT 20

TILT ANGLE
INDICATOR
(θ' DEGREES) 21

TILT AZIMUTH ANGLE
INDICATOR
(Ψ' DEGREES) 22

# FIG.5

# FIG.6

# FIG.7

AZIMUTH ANGLE

$\theta = 30°$

# FIG.8

# FIG.9

31

30a

30 b